# EUROPÄISCHE PATENTSCHRIFT

(11) **EP 2 780 990 B1**
(45) Veröffentlichungstag und Bekanntmachung des Hinweises auf die Patenterteilung: **25.07.2018**
(21) Anmeldenummer: 12801473.5
(22) Anmeldetag: 16.11.2012
(51) Int. Cl.: H01T 1/14, H02H 9/04

(54) **VERFAHREN UND SCHALTUNGSANORDNUNG ZUM TRENNEN EINER ELEKTRISCHEN VERBINDUNG ZWISCHEN ZWEI ANSCHLUSSPUNKTEN**
METHOD AND CIRCUIT ARRANGEMENT FOR DISCONNECTING AN ELECTRICAL CONNECTION BETWEEN TWO CONNECTING POINTS
PROCÉDÉ ET ENSEMBLE DE CIRCUITS PERMETTANT DE SÉPARER UNE CONNEXION ÉLECTRIQUE ENTRE DEUX POINTS DE CONNEXION

(30) Priorität: 16.11.2011 DE 102011055425
(43) Veröffentlichungstag der Anmeldung: 24.09.2014
(60) Teilanmeldung: 17164816.5
(73) Patentinhaber: Phoenix Contact GmbH & Co. KG, 32825 Blomberg (DE)
(72) Erfinder: METZGER, Andreas, 32756 Detmold (DE); FINIS, Gernot, 34119 Kassel (DE); LANGE, Ralf, 32805 Horn-Bad Meinberg (DE); STRIEWE, Martin, 32805 Horn-Bad Meinberg (DE); BEHNKE, Sven, 33189 Schlangen (DE)
(74) Vertreter: Michalski Hüttermann & Partner Patentanwälte mbB
(86) Internationale Anmeldenummer: PCT/EP2012/072850
(87) Internationale Veröffentlichungsnummer: WO 2013/072467

(56) Entgegenhaltungen:
- EP-A1- 2 278 605
- US-A- 3 430 062
- US-A1- 2008 130 180

## Beschreibung

Die Erfindung geht aus von einem Verfahren gemäß dem Oberbegriff des Anspruchs 1, einer Schaltungsanordnung gemäß dem Oberbegriff des Anspruchs 2 sowie einer Schalteinrichtung.
Ein derartiges Verfahren und eine derartige Schaltungsanordnung sind zum Beispiel aus einer Überspannungs-Schutzschaltung (Überspannungsableiter) bekannt, bei der ein als Varistor ausgebildetes Überspannungs-Schutzelement und ein Schalter in einem Strompfad in Serie geschaltet sind und ein Öffnen des Schalters ausgelöst wird, wenn die Temperatur des Varistors eine Auslöseschwelle überschreitet. Der Schalter ist wie der gesamte Strompfad für die Stoßstrombelastbarkeit des Überspannungs-Schutzelementes ausgelegt. Bei dem Trennen treten typischerweise Lichtbögen auf. Ein brennender Lichtbogen stellt dabei eine nicht unerhebliche Gefahr da. Durch die Alterung von spannungsbegrenzenden Überspannungs-Schutzschaltungen, insbesondere solchen, bei denen Varistoren (VDR: Voltage Dependent Resistor) wie zum Beispiel Metalloxid-Varistoren (MOVs) eingesetzt werden, tritt mit zunehmendem Alter ein vermehrter Stromfluss durch diese Überspannungsableiter auf, was zu einer immer stärker werdenden Erwärmung im Betrieb führt. Ebenso kann in spannungsschaltenden Überspannungsableitern, insbesondere bei Anwendungen mit Gleichstromanteil (DC-Anwendungen), ein kontinuierlicher Stromfluss auftreten, welcher verbunden mit einem Spannungsfall (zum Beispiel am Lichtbogen eines Überspannungsableiters) zu einem erheblichen Energieumsatz und damit zu einer (unzulässigen) Erwärmung von elektrischen Bauelementen und zu einer Brandgefahr führt.

Je nach Geschwindigkeit der Alterung, kann die Degradation /Erwärmung eines als Varistor ausgebildeten Überspannungsableiters so schnell erfolgen, dass zwischen den Außenanschlüssen dieses Überspannungsableiters ein Lichtbogen entsteht welcher seinerseits zu einem erheblichen Energieumsatz und in einem geschlossenen Gasvolumen zu einem Druckanstieg führt (Durchlegieren eines Varistors).

Wird die Trennvorrichtung in einem Spannungssystem verwendet bei dem die zu trennende Spannung eine Wechselspannung ist, so ist das Lichtbogenproblem eher gering, da die Wechselspannung einen Nulldurchgang aufweist, der in der Regel zu einem Verlöschen des Lichtbogens führt.

Anders hingegen im Fall einer Überlagerung der Wechselspannung mit einer Gleichspannung. Dort tritt nicht zwingend ein Nulldurchgang auf. Bei einem entsprechend hohen Gleichspannungsanteil verlischt ein brennender Lichtbogen dann nicht einfach, sondern muss durch weitere konstruktive Maßnahmen zum Verlöschen gebracht werden.

Die sichere Trennung des Überspannungs-Schutzelementes von einem speisenden Stromnetz ist insbesondere in Gleichstromnetzen (DC- Netzen) durch die fehlenden natürlichen Nulldurchgänge sowie darüber hinaus in von Photovoltalkanlagen gespeisten DC-Netzen durch die besondere, nichtlineare Charakteristik der Photovoltaik-Stromquelle erschwert. Zusätzlich können parasitäre oder konzentrierte Induktivitäten im DC-Kreis die Stromunterbrechung erschweren. Der Einsatz bekannter Überstromschutzelemente (z.B. Schmelzsicherungen), welche im Fehlerfall einen entstehenden Kurzschlussstrom abschalten könnten, ist in Photovoltaikanlagen nur sehr eingeschränkt möglich, da hier der Betriebsstrom bereits nahe an dem möglichen Kurzschlussstrom liegt.

Eine Vorrichtung zum Überspannungsschutz einer elektrischen Anlage ist beispielsweise aus der EP 2 278 605 A1 bekannt.

Der Erfindung liegt die Aufgabe zu Grunde, ein Verfahren und eine entsprechende Schaltungsanordnung zum Trennen einer elektrischen Verbindung eines Überspannungs-Schutzelementes von einem Anschlusspunkt anzugeben, die diese Verbindung sicher und vollständig trennen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Verfahren ist vorgesehen, dass beim Öffnen des ersten Schalters, insbesondere durch das Öffnen dieses ersten Schalters, auf einen zweiten Zuleitungspfad umgeschaltet wird, der parallel zu dem ersten Zuleitungspfad geschaltet ist, wobei in dem zweiten Zuleitungspfad ein zweiter öffnender Schalter zum sicheren Trennen eines Folgestroms angeordnet ist, der gegenüber dem Öffnen des ersten Schalters zeitverzögert geöffnet wird.

Wird aufgrund der Druckänderung und/oder der Temperaturänderung des Überspannungs-Schutzelementes das Öffnen des ersten Schalters ausgelöst, so kommutiert der Stromfluss auf den zweiten Zuleitungspfad. Da zu dem Zeitpunkt des Öffnens des ersten Schalters somit keine Stromunterbrechung erfolgt, muss der erste Schalter auch nicht dafür ausgebildet sein, einen Gleichstrom (DC-Stromfluss) sicher zu unterbrechen.

Gemäß des erfindungsgemäßen Verfahrens ist weiter vorgesehen, dass der zweite Zuleitungspfad permanent parallel zu dem ersten Zuleitungspfad geschaltet ist, wobei die Impedanz des zweiten Zuleitungspfades bei geschlossenen Schaltern wesentlich höher ist, als die Impedanz des ersten Zuleitungspfades. Dadurch, dass die Impedanz des zweiten Zuleitungspfades bei geschlossenen Schaltern deutlich höher ist, als die Impedanz des ersten Zuleitungspfades, fließt bei geschlossenen Schaltern, also dem Ausgangszustand der Schaltungsanordnung, der elektrische Strom im Bereich der parallel geschalteten Zuleitungspfade hauptsächlich durch den ersten Zuleitungspfad. Wird der erste Schalter geöffnet, so fließt der elektrische Strom nur noch durch den zweiten Zuleitungspfad.

Unter einer wesentlich höheren Impedanz des zweiten Zuleitungspfades gegenüber dem ersten Zuleitungspfad ist insbesondere eine mindestens zehn Mal so hohe Impedanz zu verstehen. Bei geschlossenen Schaltern fließt dann ein um mehr als eine Zehnerpotenz höherer Strom durch den ersten Zuleitungspfad als durch den zweiten Zuleitungspfad. Bei einem solchen Verhältnis ist der Strom durch den zweiten Zuleitungspfad vernachlässigbar klein. Besonders bevorzugt ist die Impedanz des zweiten Zuleitungspfades bei geschlossenen Schaltern mindestens hundert Mal höher als die Impedanz des ersten Zuleitungspfades.

Bei der erfindungsgemäßen Schaltungsanordnung ist vorgesehen, dass diese weiterhin folgende Komponenten umfasst: (a) einen parallel zu dem ersten Zuleitungspfad geschalteten zweiten Zuleitungspfad, in dem ein zweiter öffnender Schalter zum sicheren Trennen eines Folgestroms angeordnet ist, wobei die Impedanz des zweiten Zuleitungspfades bei geschlossenen Schaltern wesentlich höher ist, als die Impedanz des ersten Zuleitungspfades und (b) eine Verzögerungseinrichtung zum Verzögern des Öffnens des zweiten Schalters gegenüber dem Öffnen des ersten Schalters.

Der erste Schalter ist so ausgelegt ist, dass er einen für das Überspannungs-Schutzelement spezifizierten Stoßstrom tragen kann, also bei einem derartigen Stromstoß nicht öffnet. Kommt es nun zu einer Druck- und/oder Temperaturänderung des Überspannungs-Schutzelementes die ein vorgegebenes/vorgebbares Limit überschreitet und daher auf einen Lichtbogen zwischen den Anschlüssen des Überspannungs-Schutzelementes hindeutet und/oder aufgrund dieser Druck- und/oder Temperaturänderung zu einem Überschreiten eines vorbestimmten Druck- und/oder Temperaturlimits, so löst die Auslösevorrichtung zumindest das Öffnen des ersten (stoßstromtragfähigen) Schalters aus. Der zwischen den Anschlusspunkten fließende Strom fließt anschließend ausschließlich durch den zweiten Zuleitungspfad und den noch geschlossenen zweiten Schalter, da der erste Schalter bereits geöffnet ist. Mittels der Verzögerungseinrichtung wird der zweite Schalter um eine entsprechende Verzögerungszeit Δt später geöffnet als der erste Schalter. Dieser zweite Schalter ist zum sicheren Trennen eines Folgestroms eingerichtet.

Durch die beiden separaten Zuleitungspfade und das zeitverzögerte Öffnen der beiden Schalter werden die Funktionen des Überspannungsableitens und des Löschens eines Lichtbogens von einander getrennt. Dadurch kann einerseits die Überspannungsableit-Funktion durch einen herkömmlichen ersten Schalter bewerkstelligt werden, der auch bei Netzen ohne DC-Komponente Anwendung findet. Andererseits braucht der zweite öffnende Schalter zum sicheren Trennen des Folgestroms nicht für die Stossstromtragfähigkeit des Überspannungs-Schutzelementes ausgelegt sein. Der zweite Schalter ist insbesondere derart ausgelegt, dass er -im Gegensatz zum ersten Schalter- einen für das Überspannungs-Schutzelement spezifizierten Stoßstrom nicht tragen kann.

Über die Anschlusspunkte ist das Überspannungs-Schutzelement an ein Versorgungsnetz/Stromnetz anschließbar beziehungsweise angeschlossen. Die Schaltungsanordnung mit den beiden Zuleitungspfaden für das Überspannungs-Schutzelement dient dabei insbesondere der sicheren Trennung des Überspannungs-Schutzelementes von dem Stromnetz.

Das Überspannungs-Schutzelement ist insbesondere ein Varistor. Ein Varistor ist ein spannungsabhängiger Widerstand. Oberhalb einer bestimmten Schwellspannung, die typisch für den jeweiligen Varistor ist, wird dessen Widerstand abrupt kleiner.

Die Impedanz des zweiten Zuleitungspfades ist insbesondere als Impedanzbelag über die Leitung des zweiten Zuleitungspfades verteilt.

Gemäß einer bevorzugten Ausführungsform der Erfindung ist vorgesehen, dass das Auslösen des zweiten Schalters mittelbar oder unmittelbar durch die Auslösevorrichtung bewirkt wird und/oder durch die Änderung des Stromflusses durch den zweiten Zuleitungspfad nach Öffnen des ersten Schalters bewirkt wird. Das Auslösen des zweiten Schalters wird zum Beispiel durch eine die Verzögerungseinrichtung (integral) aufweisende Auslösevorrichtung unmittelbar bewirkt und durch eine der Auslösevorrichtung nachgeschaltete Verzögerungseinrichtung mittelbar bewirkt. Diese nachgeschaltete separate Verzögerungseinrichtung, die das Auslösen des zweiten Schalters mittelbar bewirkt, kann zum Beispiel die Wärmekapazität des zweiten Zuleitungspfades selbst sein, die das entsprechende Auslösen des zweiten Schalters in Abhängigkeit von dem ursprünglichen Auslösen durch die Auslösevorrichtung verzögert.

Gemäß einer weiteren bevorzugten Ausführungsform der Erfindung weist die Schaltungsanordnung einen den zweiten Schalter und die Verzögerungseinrichtung umfassenden Schleppkontakt auf.

Mit Vorteil ist vorgesehen, dass der zweite Schalter als Schmelzsicherung ausgeführt ist oder eine Schmelzsicherung aufweist, die zumindest einen Schmelzsicherungsdraht umfasst. Die Schmelzsicherung weist einen entsprechenden Schmelzsicherungsdraht zum Durchschmelzen bei Überstrom im zweiten Zuleitungspfad auf. Durch dieses Durchschmelzen Öffnet der zweite Schalter.

Weiterhin ist ebenfalls mit Vorteil vorgesehen, dass der zweite Schalter ein Elektrolyt-gefülltes Volumen aufweist. Das Volumen ist im inneren eines Gehäuses des zweiten Schalters. Das Gehäuse weist bevorzugt eine Sollbruchstelle auf.

Gemäß einer weiteren bevorzugten Ausgestaltung der Erfindung ist vorgesehen, dass der zweite Schalter eine Einrichtung zum Einengen eines Lichtbogens im Bereich der das öffnende Schalten bewirkenden Kontakte des zweiten Schalters, insbesondere im Aufschmelzbereich des Drahtes der Schmelzsicherung, aufweist. Besonders bevorzugt ist die Einrichtung zum Einengen des entsprechenden Lichtbogens um den Draht herum angeordnet und bewegt bei oder nach dem Öffnen des zweiten Schalters elektrisch isolierende Komponenten auf diesen Draht zu. Bei einem Schleppkontakt wird diese Einrichtung bevorzugt von einem diesen Schleppkontakt umgebenden, die (DC-)Stromunterbrechung befördernden Medium (z.B. Sand) gebildet, das beim Öffnen des zweiten Schalters in die Funkenstrecke eindringt.

Gemäß einer bevorzugten Ausgestaltung der erfindungsgemäßen Schaltungsanordnung ist vorgesehen, dass der zweite Schalter eine Einrichtung zum Einengen des Lichtbogens mit zumindest drei isolierenden Platten aufweist, die im Wesentlichen mit ihren flächenhaften Ausdehnungen parallel zueinander angeordnet sind. Dabei ist vorgesehen, dass ein Draht des zweiten Schalters (i) mit einem ersten Abschnitt zwischen der ersten äußeren Platte und der mittleren Platte verläuft, (ii) mit einem zweiten Abschnitt weiterhin eine anschließende Stirnseite der mittleren Platte traversiert und im zweiten Abschnitt an einem ersten Fixierpunkt der ersten äußeren Platte und an einem zweiten Fixierpunkt der zweiten äüßeren Platte geführt ist und (iii) anschließend mit einem dritten Abschnitt im wesentlichen parallel zum ersten Abschnitt zwischen der zweiten äußeren Platte und der mittleren Platte verläuft. Der Draht ist insbesondere der Schmelzsicherungsdraht.

Insbesondere ist vorgesehen, dass bei Auslösen des zweiten Schalters der zweite Abschnitt des Drahtes mechanisch durch eine Bewegung der mittleren Platte relativ zu der ersten und/oder zweiten äußeren Platte mechanisch getrennt wird.

Mit Vorteil ist weiterhin vorgesehen, dass die isolierenden Platten korrespondierende Erhebungen und Vertiefungen aufweisen, welche in Eingriff gebracht werden können, wobei in einem geschlossenen Ruhezustand des zweiten Schalters, die Platten zueinander jeweils so angeordnet sind, dass die jeweiligen Erhebungen zumindest Abschnittsweise aufeinander liegen, und wobei in einem zweiten, geöffneten Zustand die Platten zueinander im Wesentlichen so angeordnet sind, dass die jeweiligen Erhebungen in gegen überliegenden, korrespondierenden Vertiefungen liegen, wobei weiterhin mindestens ein Kraftmittel vorgesehen ist, das bei einem Wechsel vom geschlossenen Ruhezustand in den geöffneten Zustand eine Bewegung der Platten aufeinander zu ermöglichen.

Die Erfindung betrifft weiterhin eine Schalteinrichtung zur Verwendung als zweiter Schalter bei einem vorstehend genannten Verfahren, die als Schleppkontakt ausgebildet ist und eine Einrichtung zum Einengen des Lichtbogens aufweist. Die Schalteinrichtung ist bevorzugt zusätzlich als Schmelzsicherung ausgebildet. Mittels dieser Schalteinrichtung kann eine herkömmliche Schaltungsanordnung zum Trennen einer elektrischen Verbindung eines zwischen zwei Anschlusspunkten zwischengeschalteten Überspannungs-Schutzelementes von einem dieser Anschlusspunkte zu einer sicher und vollständig trennenden Schaltungsanordnung ergänzt werden.

Gemäß einer bevorzugten Ausgestaltung der Erfindung ist vorgesehen, dass die Einrichtung zum Einengen des Lichtbogens zumindest drei isolierende Platten aufweist, die im Wesentlichen mit ihren flächenhaften Ausdehnungen parallel zueinander angeordnet sind, wobei ein Draht des zweiten Schalters (i) mit einem ersten Abschnitt zwischen der ersten äußeren Platte und der mittleren Platte verläuft, (ii) mit einem zweiten Abschnitt weiterhin eine anschließende Stirnseite der mittleren Platte traversiert und im zweiten Abschnitt an einem ersten Fixierpunkt der ersten Platte und an einem zweiten Fixierpunkt der zweiten äußeren Platte geführt ist und (iii) anschließend mit einem dritten Abschnitt im wesentlichen parallel zum ersten Abschnitt zwischen der zweiten äußeren Platte und der mittleren Platte verläuft. Der Draht ist insbesondere der Schmelzsicherungsdraht. Dadurch bekommt die Schalteinrichtung zusätzlich die Funktion einer Schmelzsicherung.

Nachfolgend wird die Erfindung unter Bezugnahme auf die anliegende Zeichnung anhand bevorzugter Ausführungsformen näher erläutert.

Es zeigen
- Fig. 1: das Schaltbild einer Schaltungsanordnung mit zwei Schaltern zum Trennen eines über zwei Anschlusspunkte mit einem Netz verbundenen Überspannungs-Schutzelementes von diesem Netz gemäß einer bevorzugten Ausführungsform der Erfindung,
- Fig. 2: eine Schalteinrichtung zur Verwendung als zweiter Schalter der in Fig. 1 gezeigten Schaltungsanordnung gemäß einer ersten Ausführungsform,
- Fig. 3: eine Schalteinrichtung zur Verwendung als zweiter Schalter der in Fig. 1 gezeigten Schaltungsanordnung gemäß einer zweiten Ausführungsform,
- Fig. 4: eine Schalteinrichtung zur Verwendung als zweiter Schalter der in Fig. 1 gezeigten Schaltungsanordnung gemäß einer dritten Ausführungsform,
- Fig. 5: die in Fig. 4 gezeigte Schalteinrichtung in einer Seitendarstellung,
- Fig. 6: die in Fig. 4 gezeigte Schalteinrichtung in einer Schnittdarstellung und
- Fig. 7: eine Detaildarstellung von Teilen der in den Figuren 4 bis 6 gezeigten Schalteinrichtung.

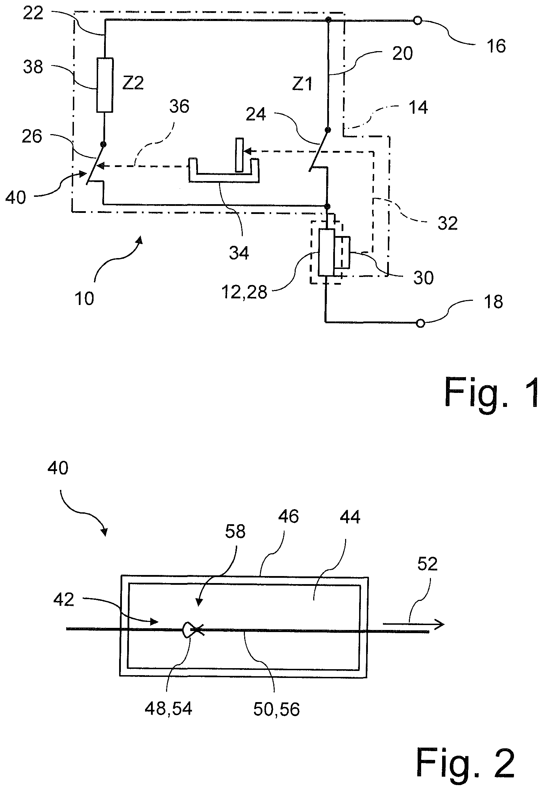

Die Figur 1 zeigt das Schaltbild einer Überspannungs-Schutzschaltung (eines Überspannungsableiters) 10 mit einem Überspannungs-Schutzelement 12 und einer (in Fig. 1 durch einen Rahmen gekennzeichneten) Schaltungsanordnung 14 zum Trennen des Überspannungs-Schutzelements 12 von einem Strom- und/oder Spannungsnetz. Die Überspannungs-Schutzschaltung 10 wird dazu über zwei Anschlusspunkte 16, 18 mit diesem (nicht gezeigten) Netz verbunden. Das Überspannungs-Schutzelement 12 und die Schaltungsanordnung 14 sind zwischen den Anschlusspunkten elektrisch in Serie geschaltet. Dazu ist einer der Anschlüsse des Überspannungs-Schutzelementes 12 über zwei parallel geschaltete Zuleitungspfade 20, 22 der Schaltungsanordnung 14 elektrisch mit dem ersten der beiden Anschlusspunkte 16 verbunden. Der andere der beiden Anschlüsse des Überspannungs-Schutzelementes 12 ist elektrisch mit dem zweiten der Anschlusspunkte 18 verbunden. In den beiden Zuleitungspfaden 20, 22 ist jeweils ein öffnender Schalter 24, 26 angeordnet, nämlich ein erster Schalter 24 im ersten Zuleitungspfad 20 und ein zweiter Schalter 26 im zweiten Zuleitungspfad 22. Die Schaltungsanordnung 14 ist eine Schaltungsanordnung 14 zum Trennen der elektrischen Verbindung des zwischen den zwei Anschlusspunkten 16, 18 zwischengeschalteten Überspannungs-Schutzelementes 12 von dem ersten dieser Anschlusspunkte 16. Sie dient als Notaus-Schaltung für das Überspannungs-Schutzelement 12, wenn dieses nicht mehr ordnungsgemäß funktioniert und im Betrieb einen zu hohen Wärmeumsatz aufweist. Das Überspannungs-Schutzelement 12 ist insbesondere ein Varistor 28.

Das Netz ist insbesondere ein Netz, das sowohl eine DC-Strom- bzw. DC-Spannungskomponente als auch eine AC-Strom- bzw. AC-Spannungskomponente aufweist.

Der erste Schalter 24 der Schaltungsanordnung 14 ist so ausgelegt ist, dass er einen für das Überspannungs-Schutzelement 12 spezifizierten Stoßstrom tragen kann. Der zweite Schalter 26 muss eine derartige Stoßstromfestigkeit nicht aufweisen. Der zweite Schalter 26 ist hingegen ein zweiter Schalter 26 zum sicheren Trennen eines Folgestroms beim Ausschalten.

Die Schaltungsanordnung 14 weist weiterhin eine Auslösevorrichtung 30 zum Auslösen eines Öffnens des ersten Schalters 24 in Abhängigkeit einer Druckänderung und/oder einer Temperaturänderung des Überspannungs-Schutzelementes 12 auf. Dieses Auslösen ist symbolisch als Pfeil 32 dargestellt. Die Auslösevorrichtung 30 ist an oder in dem Überspannungs-Schutzelement 12 angeordnet. Der erste Schalter 24 wird mittels dieser Auslösevorrichtung 30 durch die Temperatur T des Überspannungs-Schutzelementes 12 oder alternativ durch den Druck P in einem Gehäuse des Überspannungs-Schutzelementes 12 ausgelöst (Abtrennung).

Die Schaltungsanordnung 14 weist weiterhin eine Verzögerungseinrichtung 34 zum Verzögern des Öffnens des zweiten Schalters 26 gegenüber dem Öffnen des ersten Schalters 24 auf. Mittels dieser Verzögerungseinrichtung 34 wird auch der zweite Schalter 26 ausgelöst (Pfeil 36) und öffnet zeitverzögert zum Öffnen des ersten Schalters 24. Das den zweiten Schalter 26 bildende Schaltelement muss nicht die gleiche Stossstromtragfähigkeit aufweisen, wie das Überspannungs-Schutzelement 12.

Das Auslösen des zweiten Schalters 26 wird mittelbar oder unmittelbar durch die Auslösevorrichtung 34 bewirkt. Das mittelbare Auslösen erfolgt zum Beispiel durch die Änderung des Stromflusses durch den zweiten Zuleitungspfad 22 nach Öffnen des ersten Schalters 24.

Die Impedanz Z1 des ersten Zuleitungspfades 20 ist deutlich niedriger als die Impedanz Z2 des zweiten Zuleitungspfades 22. Die Impedanz Z2 des zweiten Zuleitungspfades 22 kann sowohl aus parasitären Komponenten, als auch aus mindestens einem konzentrierten Bauelement 38 gebildet sein, wobei im gezeigten Beispiel die Impedanz des Bauelements 38 die Impedanz Z2 des zweiten Zuleitungspfades 22 bestimmt.

Es ergibt sich folgende Funktion:
Im Fall der Abtrennung des Überspannungs-Schutzelementes 12 aufgrund von Übertemperatur oder Druckentwicklung in dem das Überspannungsschutzelement 12 einhausenden Gehäuses, wird zunächst das Öffnen des ersten Schalters 24 ausgelöst. Es erfolgt eine Kommutierung des Stromflusses auf den zweiten Zuleitungspfad 22. Da in diesem Zuleitungspfad 22 zu diesem Zeitpunkt noch keine Stromunterbrechung erfolgt ist, muss der zweite Schalter 26 nicht in der Lage sein, einen für das Überspannungs-Schutzelement 12 spezifizierten Stoßstrom zu tragen. Nach der Kommutierung des Stromflusses auf den zweiten Zuleitungspfad 22 erfolgt -mit zeitlicher Verzögerung- auch eine Öffnung des zweiten Schalters 26. Das Auslösen des zweiten Schalters 26 erfolgt (a) -wie bereits das Auslösen des ersten Schalters 24, jedoch zeitverzögert dazu- direkt durch Veränderung der Temperatur oder des inneren Drucks des Überspannungs-Schutzelementes 12 oder (b) durch ein selbsttätiges Auslösen des zweiten Schalters 26 bedingt durch einen möglichen Stromfluss nach der Kommutierung auf den zweiten Pfad 22 (mittelbares Auslösen).

Für eine den zweiten Schalter 26 bildende Schalteinrichtung 40 kommen verschiedene Ausführungsformen in Betracht. In einer besonders einfachen Ausführungsform ist diese Schalteinrichtung 40 als Schmelzsicherung ausgeführt. Bei geeigneter Dimensionierung der Schmelzsicherung unterbricht diese nach Kommutierung des Stromes auf den zweiten Zuleitungspfad 22 selbsttätig den Stromfluss durch das Überspannungs-Schutzelement 12. Die Ansprechzeit der Schmelzsicherung bestimmt die Zeitverzögerung zwischen dem Auslösen des ersten Schalters 24 und dem Auslösen des zweiten Schalters 26.

Bevorzugt weist die den zweiten Schalter 26 bildende Schalteinrichtung 40 auch die Verzögerungseinrichtung 34 auf.

Eine weitere Ausführungsform der den zweiten Schalter 26 bildenden Schalteinrichtung 40 ist in Fig. 2 gezeigt. Diese ist als Schleppkontakt 42 ausgebildet und weist sowohl den Schalter 26 als auch die Verzögerungseinrichtung 34 integral auf. Dazu ist in einem mit einem die (DC-)Stromunterbrechung befördernden Medium 44 (z.B. Sand) gefüllten Volumen 46, einerseits eine feststehende Kontakttulpe 48 angeordnet. Ein Kontaktstift 50, welcher durch zeitlich verzögerte Kopplung an die Betätigung des ersten Schalters 24 von der Kontakttulpe 48 trennbar ist (Pfeil 52), sorgt für ein zeitverzögertes Öffnen des zweiten Schalters 26. Kontakttulpe 48 und Kontaktstift 50 sind die das öffnende Schalten bewirkenden Kontakte 54, 56 des zweiten Schalters 26. Das sich zwischen diese Kontakte 54, 56 drängende Medium 44 engt einen im Bereich der Kontakte 54, 56 entstehenden Lichtbogen ein. Die Schalteinrichtung 40 weist somit eine Einrichtung 58 zum Einengen eines Lichtbogens im Bereich der das öffnende Schalten bewirkenden Kontakte 54, 56 des zweiten Schalters 26 auf. Das Medium ist insbesondere Sand.

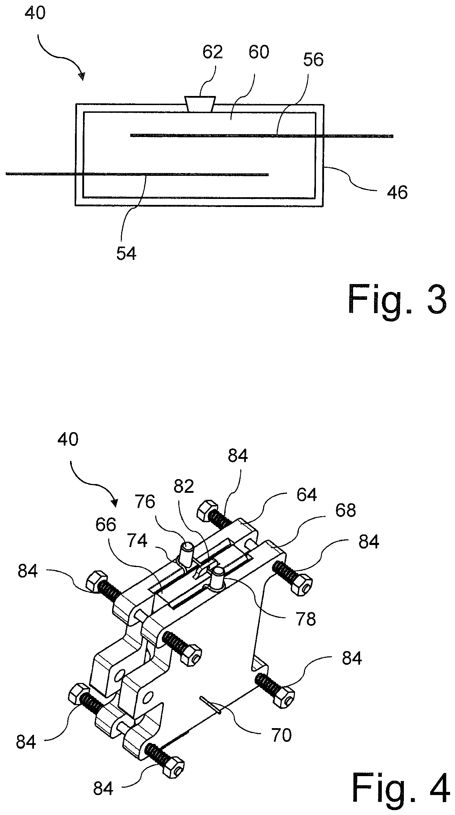

Fig. 3 zeigt noch eine weitere Ausführungsform der Schalteinrichtung 40. Sie besteht aus einer Anordnung von zwei die Kontakte 54, 56 bildenden Elektroden in einem mit einem Elektrolyt 60 gefüllten Volumen 46, welches bei Entstehung eines inneren Überdruckes, das, Austreten des enthaltenen Elektrolyts 60 zulässt. Kommutiert der Stromfluss durch die Schaltungsanordnung 14 auf diese Schalteinrichtung 40, so führt der Stromfluss einerseits zu einer elektrolytischen Zersetzung des Elektrotytes 60 und somit zur Gasentwicklung, andererseits führt der Stromfluss auch zur Aufheizung und letztlich zum Verdampfen des Elektrolytes 60. Durch den entstehenden Überdruck tritt das Elektrolyt 60 (bzw. die gasförmige Phase seines flüssigen Mediums bzw. seine gasförmigen Zersetzungsprodukte) irreversibel aus dem Volumen 46 aus, sodass es durch Fehlen des leitfähigen Elektrolytes 60 zu einer Stromunterbrechung kommt. Der zweite Schalter 26 öffnet. Um das Elektrolyt 60 wohldefiniert austreten zu lassen, weist ein das Volumen 46 begrenzendes Gehäuse eine Sollbruchstelle 62 auf.

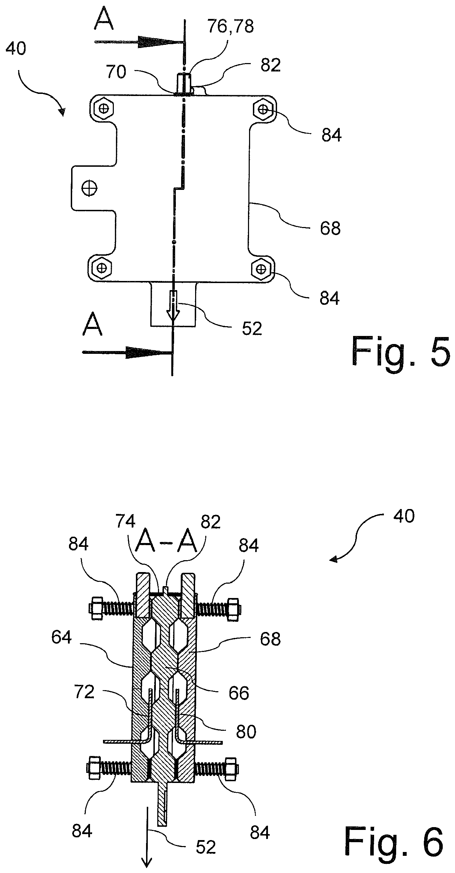

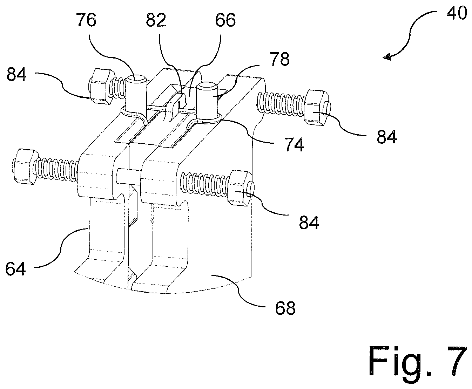

Eine weitere Ausführungsform der Schalteinrichtung 40 ist in den Figuren 4 bis 7 gezeigt. Die Schalteinrichtung 40 weist eine Einrichtung 58 zum Einengen des Lichtbogens auf, die zumindest drei isolierende Platten 64, 66, 68 umfasst. Die Platten 64, 66, 68 sind im Wesentlichen mit ihren flächenhaften Ausdehnungen parallel zueinander angeordnet, wobei ein Draht 70 des zweiten Schalters 26
- mit einem ersten Abschnitt 72 zwischen der ersten äußeren Platte 64 und der mittleren Platte 66 verläuft,
- mit einem zweiten Abschnitt 74 weiterhin eine anschließende Stirnseite der mittleren Platte 66 traversiert und im zweiten Abschnitt 74 an einem ersten Fixierpunkt 76 der ersten Platte 64 und an einem zweiten Fixierpunkt 78 der dritten Platte 68 geführt ist und
- anschließend mit einem dritten Abschnitt 80 im wesentlichen parallel zum ersten Abschnitt 72 zwischen der zweiten äußeren Platte 68 und der mittleren Platte 66 verläuft.

Der Draht 70 ist ein Schmelzsicherungsdraht. Der zweite Abschnitt 74 ist zwischen den Fixierpunkten 76, 78 in einer Mitnahmestruktur 82 der mittleren Platte 66 geführt, sodass der Draht 70 bei einer Bewegung der mittleren Platte 66 (Pfeil 52) relativ zu der ersten und/oder zweiten äußeren Platte 64, 68 abgerissen wird. Die dabei entstehenden Enden des abgerissenen Drahtes 70 bilden die das öffnende Schalten bewirkenden Kontakte 54, 56 des zweiten Schalters 26.

Mit anderen Worten wird also zum Auslösen des zweiten Schalters 26 der zweite Abschnitt 74 des Drahtes 70 mechanisch durch eine Bewegung der mittleren Platte 66 relativ zu der ersten und/oder zweiten äußeren Platte 64, 68 notfalls mechanisch getrennt wenn der Schmelzsicherungsdraht nicht aufgrund des hohen Stromes durchbrennt.

Die isolierenden Platten 64, 66, 68 weisen korrespondierende Erhebungen und Vertiefungen auf, welche in Eingriff gebracht werden können, wobei in einem geschlossenen Ruhezustand des zweiten Schalters 26, die Platten 64, 66, 68 zueinander jeweils so angeordnet sind, dass die jeweiligen Erhebungen zumindest Abschnittsweise aufeinander liegen, und wobei in einem zweiten, geöffneten Zustand des zweiten Schalters 26 die Platten 64, 66, 68 zueinander im Wesentlichen so angeordnet sind, dass die jeweiligen Erhebungen in gegen überliegenden, korrespondierenden Vertiefungen liegen.

Weiterhin sind mehrere Kraftmittel 84 vorgesehen, die bei einem Wechsel vom geschlossenen Ruhezustand in den geöffneten Zustand eine Bewegung der Platten 64, 66, 68 aufeinander zu ermöglichen. Dadurch wird ein im Bereich der das öffnende Schalten bewirkenden Kontakte 54, 56 möglicherweise entstehender Lichtbogen eingeengt und gelöscht. Die Kraftmittel basieren auf einer Rückstellkraft von Druckfedern dieser Kraftmittel.

**Bezugszeichenliste**

| | |
|---|---|
| Überspannungs-Schutzschaltung | 10 |
| Überspannungs-Schutzelement | 12 |
| Schaltungsanordnung | 14 |
| Anschlusspunkt | 16 |
| Anschlusspunkt | 18 |
| Zuleitungspfad | 20 |
| Zuleitungspfad | 22 |
| Schalter | 24 |
| Schalter | 26 |
| Varistor | 28 |
| Auslösevorrichtung | 30 |
| Pfeil | 32 |
| Verzögerungseinrichtung | 34 |
| Pfeil | 36 |
| Bauelement | 38 |
| Schalteinrichtung | 40 |
| Schleppkontakt | 42 |
| Medium | 44 |
| Volumen | 46 |
| Kontakttulpe | 48 |
| Kontaktstift | 50 |
| Pfeil | 52 |
| Kontakt | 54 |
| Kontakt | 56 |
| Einrichtung | 58 |
| Elektrolyt | 60 |
| Sollbruchstelle | 62 |
| Platte | 64 |
| Platte | 66 |
| Platte | 68 |
| Draht | 70 |
| erster Abschnitt | 72 |
| zweiter Abschnitt | 74 |
| erster Fixpunkt | 76 |
| zweiter Fixpunkt | 78 |
| dritter Abschnitt | 80 |
| Mitnahmestruktur | 82 |
| Kraftmittel | 84 |

## Patentansprüche

1. Verfahren zum Trennen einer elektrischen Verbindung eines zwischen zwei Anschlusspunkten (16, 18) zwischengeschalteten Überspannungs-Schutzelementes (12) von einem dieser Anschlusspunkte (16), mit einem ersten Zuleitungspfad (20), welcher einen Anschluss des Überspannungs-Schutzelementes (12) mit dem einen der Anschlusspunkte (16) elektrisch verbindet, wobei in dem ersten Zuleitungspfad (20) ein erster öffnender Schalter (24) angeordnet ist, der von einer Druckänderung und/oder einer Temperaturänderung des Überspannungs-Schutzelementes (12) ausgelöst geöffnet wird, und beim Öffnen des ersten Schalters (24) auf einen parallel zu dem ersten Zuleitungspfad (20) geschalteten zweiten Zuleitungspfad (22) umgeschaltet wird, wobei in dem zweiten Zuleitungspfad (22) ein zweiter öffnender Schalter (26) zum sicheren Trennen eines Folgestroms angeordnet ist,
**dadurch gekennzeichnet, dass** das Öffnen des zweiten Schalters (26) gegenüber dem Öffnen des ersten Schalters (24) mittels einer Verzögerungseinrichtung (34) zeitverzögert erfolgt, wobei der zweite Zuleitungspfad (22) permanent parallel zu dem ersten Zuleitungspfad (20) geschaltet ist, wobei die Impedanz (Z2) des zweiten Zuleitungspfades (22) bei geschlossenen Schaltern (24, 26) deutlich höher ist, als die Impedanz des ersten Zuleitungspfades (20).

2. Schaltungsanordnung (14) zum Trennen einer elektrischen Verbindung eines zwischen zwei Anschlusspunkten (16, 18) zwischengeschalteten Überspannungs-Schutzelementes (12) von einem dieser Anschlusspunkte (16), mit einem ersten Zuleitungspfad (20), welcher einen Anschluss des Überspannungs-Schutzelementes (12) mit dem einen der Anschlusspunkte (16) elektrisch verbindet und in dem ein erster öffnender Schalter (24) angeordnet ist, und mit einer Auslösevorrichtung (30) zum Auslösen eines Öffnens des ersten Schalters (24) in Abhängigkeit einer Druckänderung und/oder einer Temperaturänderung des Überspannungs-Schutzelementes (12), **gekennzeichnet durch**
- einen parallel zu dem ersten Zuleitungspfad (20) geschalteten zweiten Zuleitungspfad (22), in dem ein zweiter öffnender Schalter (26) zum sicheren Trennen eines Folgestroms angeordnet ist, wobei die Impedanz (Z2) des zweiten Zuleitungspfades (22) bei geschlossenen Schaltern (24, 26) wesentlich höher ist, als die Impedanz (Z1) des ersten Zuleitungspfades (20)
- eine Verzögerungseinrichtung (34) zwischen dem zweiten öffnenden Schalter (26) und dem ersten öffnenden Schalter (24) und
- die Verzögerungseinrichtung (34) zum Verzögern des Öffnens des zweiten Schalters (26) gegenüber dem Öffnen des ersten Schalters (24).

3. Schaltungsanordnung nach Anspruch 2, wobei die Impedanz (Z2) des zweiten Zuleitungspfades (22) als Impedanzbelag über die Leitung des zweiten Zuleitungspfades (22) verteilt ist.

4. Schaltungsanordnung nach einem der Ansprüche 2 oder 3, wobei das Auslösen des zweiten Schalters (26) mittelbar oder unmittelbar durch die Auslösevorrichtung (34) bewirkt wird und/oder durch die Änderung des Stromflusses durch den zweiten Zuleitungspfad (22) nach Öffnen des ersten Schalters (24) bewirkt wird.

5. Schaltungsanordnung nach einem der Ansprüche 2 bis 4, wobei der zweite Schalter (26) als Schmelzsicherung ausgeführt ist oder eine Schmelzsicherung aufweist, die zumindest einen Schmelzsicherungsdraht umfasst.

6. Schaltungsanordnung nach einem der Ansprüche 2 bis 5, mit einem den zweiten Schalter (26) und die Verzögerungseinrichtung (34) umfassenden Schleppkontakt (42) .

7. Schaltungsanordnung nach einem der Ansprüche 2 bis 4, wobei der zweite Schalter (26) ein mit einem Elektrolyt (60) gefülltes Volumen (46) aufweist.

8. Schaltungsanordnung nach einem der Ansprüche 2 bis 7, wobei der zweite Schalter (26) eine Einrichtung (58) zum Einengen eines Lichtbogens im Bereich der das öffnende Schalten bewirkenden Kontakte (54, 56) des zweiten Schalters (26) aufweist.

9. Schaltungsanordnung nach Anspruch 8, wobei die Einrichtung zum Einengen des Lichtbogens zumindest drei isolierende Platten (64, 66, 68) aufweist, die im Wesentlichen mit ihren flächenhaften Ausdehnungen parallel zueinander angeordnet sind, wobei ein Draht (70) des zweiten Schalters (26)
- mit einem ersten Abschnitt (72) zwischen der ersten äußeren Platte (64) und der mittleren Platte (66) verläuft,
- mit einem zweiten Abschnitt (74) weiterhin eine anschließende Stirnseite der mittleren Platte (66) traversiert und im zweiten Abschnitt (74) an einem ersten Fixierpunkt (76) der ersten äußeren Platte (64) und an einem zweiten Fixierpunkt (78) der zweiten äußeren Platte (68) geführt ist und
- anschließend mit einem dritten Abschnitt (80) im wesentlichen parallel zum ersten Abschnitt (72) zwischen der zweiten äußeren Platte (68) und der mittleren Platte (66) verläuft.

10. Schaltungsanordnung nach Anspruch 9, wobei bei Auslösen des zweiten Schalters (26) der zweite Abschnitt (74) des Drahtes (70) durch eine Bewegung der mittleren Platten (66) relativ zu der ersten und/oder zweiten äußeren Platte (64, 68) mechanisch getrennt wird.

11. Schaltungsanordnung nach Anspruch 9 oder 10, wobei die isolierenden Platten (64, 66, 68) korrespondierende Erhebungen und Vertiefungen aufweisen, welche in Eingriff gebracht werden können, wobei in einem geschlossenen Ruhezustand des zweiten Schalters (26), die Platten (64, 66, 68) zueinander jeweils so angeordnet sind, dass die jeweiligen Erhebungen zumindest Abschnittsweise aufeinander liegen, und wobei in einem zweiten, geöffneten Zustand die Platten (64, 66, 68) zueinander im Wesentlichen so angeordnet sind, dass die jeweiligen Erhebungen in gegen überliegenden, korrespondierenden Vertiefungen liegen, wobei weiterhin mindestens ein Kraftmittel (84) vorgesehen ist, das bei einem Wechsel vom geschlossenen Ruhezustand in den geöffneten Zustand eine Bewegung der Platten (64, 66, 68) aufeinander zu ermöglichen.

## Claims

1. A method for disconnecting an electrical connection of an overvoltage protective element (12), connected between two connection points (16, 18), from one of these connection points (16), comprising a first feed line path (20), which electrically connects a connection of the overvoltage protective element (12) to one of the connection points (16), wherein a first opening switch (24) is arranged in the first feed line path (20), which switch is opened in a manner triggered by a change in pressure and/or a change in temperature of the overvoltage protective element (12), and, when the first switch (24) is opened, switching over occurs to a second feed line path (22) connected in parallel with the first feed line path (20), wherein a second opening switch (26) is arranged in the second feed line path (22) in order to safely disconnect a follow current, **characterised in that** the second switch (26) is opened by means of a delay device (34) with a time delay compared to the opening of the first switch (24), wherein the second feed line path (22) is connected permanently in parallel with the first feed line path (20), wherein the impedance (Z2) of the second feed line path (22) when the switches (24, 26) are closed is higher than the impedance of the first feed line path (20).

2. A circuit assembly (14) for disconnecting an electrical connection of an overvoltage protective element (12), connected between two connection points (16, 18), from one of these connection points (16), comprising a first feed line path (20), which electrically connects a connection of the overvoltage protective element (12) to one of the connection points (16) and in which there is arranged a first opening switch (24), and comprising a trigger device (30) for triggering the opening of the first switch (24) depending on a change in pressure and/or a change in temperature of the overvoltage protective element (12), **characterised by**
- a second feed line path (22) connected in parallel with the first feed line path (20), in which there is arranged a second opening switch (26) for safely disconnecting a follow current, wherein the impedance (Z2) of the second feed line path (22) when the switches (24, 26) are closed is much higher than the impedance (Z1) of the first feed line path (20),
- a delay device (34) between the second opening switch (26) and the first opening switch (24), and
- the delay device (34) for delaying the opening of the second switch (26) compared to the opening of the first switch (24).

3. The circuit assembly according to claim 2, wherein the impedance (Z2) of the second feed line path (22) is spread as an impedance per unit length over the line of the second feed line path (22).

4. The circuit assembly according to either one of claims 2 or 3, wherein the triggering of the second switch (26) is brought about indirectly or directly by the trigger device (34) and/or by the change in the flow of current through the second feed line path (22) once the first switch (24) has been opened.

5. The circuit assembly according to any one of claims 2 to 4, wherein the second switch (26) is embodied as a fuse or includes a fuse that comprises at least one fuse wire.

6. The circuit assembly according to any one of claims 2 to 5, having a make-before-break contact (42) comprising the second switch (26) and the delay device (34).

7. The circuit assembly according to any one of claims 2 to 4, wherein the second switch (26) has a volume (46) filled with an electrolyte (60).

8. The circuit assembly according to any one of claims 2 to 7, wherein the second switch (26) has a device (58) for constricting an electric arc in the region of the contacts (54, 56) of the second switch (26) causing the opening switching.

9. The circuit assembly according to claim 8, wherein the device for constricting the electric arc has at least three isolating plates (64, 66, 68), which are arranged with their planar extents substantially parallel to one another, wherein a wire (70) of the second switch (26)
- runs with a first portion (72) between the first outer plate (64) and the middle plate (66),
- with a second portion (74), also traverses a subsequent end face of the middle plate (66) and, in the second portion (74), is guided at a first fixing point (76) of the first outer plate (64) and at a second fixing point (78) of the second outer plate (68), and
- then, with a third portion (80), runs substantially parallel to the first portion (72) between the second outer plate (68) and the middle plate (66).

10. The circuit assembly according to claim 9, wherein, when the second switch (26) is triggered, the second portion (74) of the wire (70) is mechanically separated by a movement of the middle plates (66) relative to the first and/or second outer plate (64, 68).

11. The circuit assembly according to claim 9 or 10, wherein the isolating plates (64, 66, 68) have corresponding elevations and indentations which can be brought into engagement, wherein, in a closed rest state of the second switch (26), the plates (64, 66, 68) are arranged relative to one another such that the elevations in question lie on one another at least in part, and wherein, in a second opened state, the plates (64, 66, 68) are arranged relative to one another substantially such that the elevations in question lie in corresponding indentations arranged opposite, wherein at least one force means (84) is also provided, which, in the event of a change from the closed rest state into the open state, enables a movement of the plates (64, 66, 68) towards one another.

## Revendications

1. Procédé de séparation d'une connexion électrique entre un élément de protection contre les surtensions (12) interposé entre deux points de connexion (16, 18) de l'un de ces points de connexion (16), avec un premier chemin d'alimentation (20), lequel relie électriquement une connexion de l'élément de protection contre les surtensions (12) avec l'un des points de connexion (16), où, dans le premier chemin d'alimentation (20), un premier commutateur (24) ouvert est disposé, qui est ouvert déclenché par une modification de la pression et/ou une modification de la température de l'élément de protection contre les surtensions (12), et, lors de l'ouverture du premier commutateur (24), est commuté vers un deuxième chemin d'alimentation (22) branché en parallèle par rapport au premier chemin d'alimentation (20), où, dans le deuxième chemin d'alimentation (22), un deuxième commutateur (26) ouvert est disposé pour la séparation sécurisée d'un courant secondaire,
**caractérisé en ce que** l'ouverture du deuxième commutateur (26) a lieu décalée dans le temps par rapport à l'ouverture du premier commutateur (24) au moyen d'un dispositif de temporisation (34), où le deuxième chemin d'alimentation (22) est branché de manière permanente en parallèle par rapport au premier chemin d'alimentation (20), où l'impédance (Z2) du deuxième chemin d'alimentation (22) est nettement plus élevée pour des commutateurs (24, 26) fermés que l'impédance du premier chemin d'alimentation (20).

2. Agencement de circuit (14) destiné à la séparation entre une connexion électrique d'un élément de protection contre les surtensions (12) interposé entre deux points de connexion (16, 18) de l'un de ces points de connexion (16), avec un premier chemin d'alimentation (20), lequel relie électriquement une connexion de l'élément de protection contre les surtensions (12) avec l'un des points de connexion (16), et dans lequel un premier commutateur (24) ouvert est disposé, et avec un dispositif de déclenchement (30) pour le déclenchement d'une ouverture du premier commutateur (24) en fonction d'une modification de la pression et/ou d'une modification de la température de l'élément de protection contre les surtensions (12),
**caractérisé par**
- un deuxième chemin d'alimentation (22) branché en parallèle par rapport au premier chemin d'alimentation (20), dans lequel un deuxième commutateur (26) ouvert est disposé pour une séparation sécurisée d'un courant secondaire, où l'impédance (Z2) du deuxième chemin d'alimentation (22) est nettement plus élevée pour des commutateurs (24, 26) fermés que l'impédance (Z1) du premier chemin d'alimentation (20),
- un dispositif de temporisation (34) entre le deuxième commutateur (26) ouvert et le premier commutateur (24) ouvert, et en ce que
- le dispositif de temporisation (34) est prévu pour un décalage de l'ouverture du deuxième commutateur (26) par rapport à l'ouverture du premier commutateur (24).

3. Agencement de circuit selon la revendication 2, dans lequel l'impédance (Z2) du deuxième chemin d'alimentation (22) est répartie sous la forme d'un spectre d'impédance sur la ligne du deuxième chemin d'alimentation (22).

4. Agencement de circuit selon l'une des revendications 2 ou 3, dans lequel le déclenchement du deuxième commutateur (26) est provoqué de manière immédiate ou non immédiate par le dispositif de déclenchement (34) et/ou par la modification du flux du courant par le deuxième chemin d'alimentation (22) après l'ouverture du premier commutateur (24).

5. Agencement de circuit selon l'une des revendications 2 à 4, dans lequel le deuxième commutateur (26) est conçu sous la forme d'un coupe-circuit à fusible ou présente un coupe-circuit à fusible qui comprend au moins un fil de coupe-circuit à fusible.

6. Agencement de circuit selon l'une des revendications 2 à 5, doté d'un contact de traîne (42) comprenant le deuxième commutateur (26) et le dispositif de temporisation (34).

7. Agencement de circuit selon l'une des revendications 2 à 4, dans lequel le deuxième commutateur (26) présente un volume (46) rempli avec un électrolyte (60).

8. Agencement de circuit selon l'une des revendications 2 à 7, dans lequel le deuxième commutateur (26) présente une installation (58) destinée à l'uniformisation d'un arc de lumière dans la région des contacts (54, 56) du deuxième commutateur (26) provoquant la commutation ouverte.

9. Agencement de circuit selon la revendication 8, dans lequel l'installation pour l'uniformisation de l'arc de lumière présente au moins trois plaques isolantes (64, 66, 68) qui sont disposées parallèles les unes par rapport aux autres, essentiellement avec leurs extensions sur la surface, où un fil (70) du deuxième commutateur (26)
- s'étend avec une première partie (72) entre la première plaque extérieure (64) et la plaque du milieu (66),
- traverse avec une deuxième partie (74) encore une face frontale attenante de la plaque du milieu (66) et est mené dans une deuxième partie (74) à un premier point de fixation (76) de la première plaque extérieure (64) et à un deuxième point de fixation (78) de la deuxième plaque extérieure (68), et
- ensuite s'étend avec une troisième partie (80) essentiellement parallèlement par rapport à la première partie (72) entre la deuxième plaque extérieure (68) et la plaque du milieu (66).

10. Agencement de circuit selon la revendication 9, dans lequel, lors du déclenchement du deuxième commutateur (26), la deuxième partie (74) du fil (70) est séparée mécaniquement par un déplacement des plaques du milieu (66) par rapport à la première, et/ou à la deuxième plaque extérieure (64, 68).

11. Agencement de circuit selon la revendication 9 ou 10, dans lequel les plaques isolantes (64, 66, 68) présentent des élévations et des creux correspondants, lesquels peuvent être mis en prise, où, dans un état de repos fermé du deuxième commutateur (26), les plaques (64, 66 68) sont respectivement disposées les unes par rapport aux autres de telle manière que les élévations respectives se situent au moins par endroits les unes sur les autres, et où, dans un deuxième état ouvert, les plaques (64, 66, 68) sont disposées essentiellement les unes par rapport aux autres de telle manière que les élévations respectives se situent dans des creux correspondants opposés, où, en outre, au moins un moyen (84) est prévu pour permettre, lors d'un changement de l'état de repos fermé vers l'état ouvert, un mouvement des plaques (64, 66, 68) les unes sur les autres.
